# DEMANDE DE BREVET EUROPEEN

(11) **EP 1 659 760 A1**
(43) Date de publication de la demande: **24.05.2006**
(21) Numéro de dépôt: 05300805.8
(22) Date de dépôt: 10.10.2005
(51) Int. Cl.: H04L 29/08

(54) **Procédé d'établissement de connexions pour l'accès de terminaux d'utilisateurs itinérants à des réseaux de données**

(30) Priorité: 17.11.2004 FR 0452655
(71) Demandeur: ALCATEL, 75008 Paris (FR)
(72) Inventeur: Krishnan, Madhu-Kumar, 2610 Wilrijk Antwerpen (BE); Martinot, Olivier, 91210 Draveil (FR); Mathieu, Guy, 91400 Orsay (FR)
(74) Mandataire: Chaffraix, Sylvain

(57) **Abrégé**

Un procédé est dédié à l'établissement de connexions pour l'accès à des réseaux de données (RD) de terminaux de communication (PC, TM) d'utilisateurs ayant souscrits des abonnements correspondant à des profils de connexion auprès de fournisseurs de services dits « principaux », via des réseaux privés (RFSi) de fournisseurs de services et des réseaux d'accès de types différents (PSTN, UMTS). Ce procédé consiste i) à attribuer à chacun des utilisateurs un identifiant d'utilisateur général pour chaque type de réseau d'accès (PSTN, UMTS) et à stocker chaque identifiant d'utilisateur général en correspondance du profil de connexion dans une mémoire principale (MPi), ii) en cas de connexion d'un terminal (PC) à l'un des réseaux d'accès (PSTN), associé à un réseau privé d'accueil (RFS2), au moyen d'un identifiant d'utilisateur général, à déterminer dans la mémoire principale (MP1) si elle contient l'identifiant d'utilisateur général et dans l'affirmative à copier au moins un sous-ensemble du profil de connexion correspondant dans une mémoire auxiliaire (MA2) du réseau privé d'accueil (RFS2), et iii) à configurer le réseau privé d'accueil (RFS2) et le réseau d'accès (PSTN) raccordé au terminal (PC) en fonction d'une partie au moins du sous-ensemble copié de manière à établir une connexion.

## Description

L'invention concerne les réseaux de communication, et plus précisément l'établissement de connexions bas ou haut débit de terminaux d'utilisateurs, éventuellement itinérants, à des réseaux de données.

On entend ici par « connexion » tout type de connexion établie entre un terminal de communication et un réseau de données, comme par exemple Internet, via un fournisseur d'accès physique et un fournisseur de services (éventuellement confondus). Il pourra donc s'agir d'une connexion radio (par exemple GPRS, UMTS, WiFi ou WiMAX), ou optique par câble (fibre optique), ou encore de type xDSL (ou x Digital Subscriber Line) » sur une ligne numérique à paire, symétrique ou asymétrique, utilisant les fréquences inexploitées des lignes téléphoniques des réseaux téléphoniques commutés (ou PSTN), et notamment les connexions ADSL (« Asymetric DSL »), HDSL (« High bit rate DSL »), RDSL (« Rate adaptive DSL »), VDSL (« Very high bit rate DSL ») et SDSL (« Single line DSL »).

Par ailleurs, on entend ici par « terminal de communication » tout équipement de communication pouvant être connecté à un réseau d'accès, comme par exemple un réseau de téléphonie commuté ou PSTN, un réseau de téléphonie mobile (ou réseau radio cellulaire), ou un réseau radio WiFi. Il pourra donc s'agir d'un téléphone fixe ou mobile, ou d'un téléphone à protocole Internet, ou d'un ordinateur fixe ou portable, ou d'un assistant personnel numérique (ou PDA), ou encore d'une console de jeux ou d'un terminal pour la télévision, dès lors qu'il comprend un modem haut débit interne ou externe.

Certains utilisateurs de terminaux de communication, notamment ceux dits « itinérants » ou « nomades », peuvent avoir fréquemment besoin de se connecter à un réseau de données, éventuellement en haut débit, en différents endroits et/ou avec différents types de terminaux de communication. Cela peut par exemple être le cas d'une personne disposant de plusieurs lieux de résidence, ou d'une personne se déplaçant pour des raisons professionnelles et/ou personnelles, ou encore d'une personne se trouvant momentanément dans une gare ou un aéroport.

Un utilisateur itinérant peut en effet être amené à raccorder son ordinateur en un premier endroit à un réseau d'accès physique d'un premier type, par exemple PSTN/ADSL à son domicile ou son bureau, grâce à un premier fournisseur d'accès, et en un second endroit à un réseau d'accès physique du premier type ou d'un deuxième type grâce à un second fournisseur d'accès.

Dans cette situation, l'utilisateur a souscrit un abonnement pour une connexion, éventuellement haut débit, associée au numéro de téléphone d'une première ligne téléphonique située dans le premier endroit et correspondant à un certain profil de connexion. Pour la seconde ligne téléphonique, qui est située dans le second endroit et qui est associée à un second numéro de téléphone, plusieurs cas sont possibles :
- l'utilisateur ou le « propriétaire » de la première ligne a souscrit un second abonnement pour la seconde ligne auprès des mêmes fournisseurs d'accès et de services que ceux correspondant au premier abonnement associé à la première ligne. Dans ce cas, l'utilisateur peut y connecter son ordinateur mais il disposera d'une connexion dont la bande passante sera limitée par le profil de connexion correspondant au second abonnement et non par celui correspondant à l'abonnement de la première ligne. Par contre, il aura le même profil chez le fournisseur de services (liste des services, facturations) ;
- l'utilisateur ou le « propriétaire » de la première ligne a souscrit un second abonnement pour la seconde ligne auprès d'un autre fournisseur de services que celui de la première ligne, avec un second profil de connexion différent du premier. Dans ce cas, il peut se connecter à la seconde ligne, éventuellement en haut débit, conformément au second profil de connexion. Par contre, il aura deux profils chez les fournisseurs de services (deux listes de services, deux facturations, etc);
- la seconde ligne téléphonique n'est pas utilisable pour un accès haut débit (par exemple du fait qu'il n'y a pas d'abonnement ou que le propriétaire ne permet pas d'utiliser son propre accès haut débit). Dans ce cas, l'utilisateur de la seconde ligne est obligé d'utiliser une connexion bas débit sur la seconde ligne PSTN classique, et donc il peut être contraint de payer à son fournisseur de services ou au fournisseur de l'accès local, une somme additionnelle fonction, par exemple, de la durée de sa connexion sur la seconde ligne téléphonique.

Un utilisateur peut être également amené, par exemple, à raccorder son ordinateur en un premier endroit à un réseau d'accès d'un premier type, par exemple PSTN, appartenant à un premier fournisseur d'accès, et à connecter son téléphone mobile (ou son terminal WiFi) en un second endroit (éventuellement identique au premier) à un réseau d'accès d'un second type, par exemple UMTS, appartenant à un second fournisseur d'accès.

Dans cette situation, l'utilisateur doit avoir souscrit, d'une part, auprès d'un premier fournisseur de services un premier abonnement pour une connexion haut débit associée au numéro de téléphone de la première ligne téléphonique située dans le premier endroit, et d'autre part, auprès d'un second fournisseur de services (éventuellement identique au premier) un second abonnement pour une connexion haut débit associée au numéro de téléphone de son téléphone mobile.

Des solutions existent dans le cadre des réseaux mobiles de troisième génération, ainsi que décrit dans l'article « *User Profile Identification in Future Mobile Telecomunications Systems »* de G. P. Eleftheriadis et M. E. Theologou. Mais cette solution s'applique exclusivement aux terminaux nomades (et plus particulièrement UMTS) et ne prend pas en compte les terminaux fixes (ADSL par exemple) et donc les contraintes liées à ces terminaux fixes.

L'invention a donc pour but d'améliorer la situation, et notamment de permettre à un utilisateur itinérant de disposer d'une connexion, éventuellement haut débit, correspondant si possible à un profil de connexion choisi, pour n'importe lequel de ses terminaux de communication et/ou en n'importe quel endroit autorisant une telle connexion, ainsi que de permettre une taxation et/ou facturation centralisée et la définition de profils de connexion en fonction de contraintes locales, notamment techniques.

Elle propose à cet effet un procédé dédié à l'établissement de connexions pour l'accès à au moins un réseau de données de terminaux de communication, utilisés par des utilisateurs ayant souscrits des abonnements correspondant à des profils de connexion (éventuellement haut débit) auprès de fournisseurs de services dit « principaux », via des réseaux privés de fournisseurs de services et des réseaux d'accès de types différents, raccordés entre eux par des réseaux de transport de types différents.

Ce procédé se caractérise par le fait qu'il consiste :
- à attribuer à chacun des utilisateurs un identifiant d'utilisateur général pour chaque type de réseau d'accès et à stocker chaque identifiant d'utilisateur général en correspondance de son profil de connexion dans une mémoire dite « principale », et
- en cas de connexion au moyen d'un identifiant d'utilisateur général d'un terminal à l'un des réseaux d'accès, associé à un réseau privé d'un fournisseur de services d'accueil, à déterminer dans la mémoire principale si elle contient cet identifiant d'utilisateur général, et dans l'affirmative à copier au moins un sous-ensemble du profil de connexion correspondant à cet identifiant d'utilisateur dans une mémoire auxiliaire du réseau privé d'accueil,
- puis, à configurer le réseau privé d'accueil, le réseau d'accès auquel est raccordé le terminal et le réseau de transport qui les raccorde en fonction d'une partie au moins du sous-ensemble copié (et stocké) afin d'établir une connexion entre le terminal et le réseau privé d'accueil,
- le réseau privé d'accueil transmet des données de taxation et/ou de facturation au réseau privé du fournisseur de services principal afin qu'il gère la facturation de la connexion pour son client utilisateur et/ou qu'il puisse lui facturer le service rendu pour la connexion d'accueil.

Le procédé selon l'invention peut comporter d'autres caractéristiques qui peuvent être prises séparément ou en combinaison, et notamment :
- on peut communiquer au réseau privé du fournisseur de services d'accueil, au moyen du terminal qui est connecté au réseau d'accès qui lui est associé, des données représentatives de l'identifiant d'utilisateur ainsi que d'un nom d'utilisateur et/ou d'un mot de passe (ou « login »), afin d'authentifier l'utilisateur ;
- la communication des données de l'utilisateur se fait par exemple au moyen d'au moins un message sécurisé ;
- lorsque le réseau privé du fournisseur de services d'accueil reçoit les données de l'utilisateur, il peut déterminer le fournisseur de services principal de l'utilisateur afin de transmettre à son réseau privé (principal) les données de l'utilisateur. Puis, lorsque le réseau privé principal reçoit les données de l'utilisateur, il vérifie si elles correspondent effectivement à un client ayant souscrit un abonnement pour une connexion haut débit, et dans l'affirmative il détermine dans la mémoire principale le profil de connexion souscrit afin de transmettre au réseau privé du fournisseur de services d'accueil un sous-ensemble de ce profil de connexion en vue de sa mémorisation dans la mémoire auxiliaire ;
- le fournisseur de services d'accueil peut effectuer un contrôle complémentaire de sécurité auprès de l'utilisateur qui requiert la connexion pour confirmer l'autorisation d'accès et/ou compléter le profil de connexion local (définition du débit et/ou de la qualité de service (QoS)) ;
- ce contrôle complémentaire de sécurité peut par exemple consister à établir une liaison téléphonique avec l'utilisateur pour lui demander une confirmation de demande de connexion et/ou la communication de données d'identification ;
- le réseau privé d'accueil peut initier l'établissement de la connexion avec le terminal requérant en fonction du sous-ensemble du profil de connexion stocké dans la mémoire auxiliaire et de contraintes locales ;
- on peut prévoir au moins un système de gestion d'accès raccordé aux réseaux de transport et aux réseaux d'accès associés de manière à les configurer sélectivement pour établir les connexions ;
- on peut également raccorder le système de gestion d'accès aux réseaux privés afin de les configurer sélectivement pour établir les connexions;
- en variante, on peut prévoir des systèmes de gestion de services raccordés respectivement aux réseaux privés afin de les configurer sélectivement pour établir les connexions ;
- on peut prévoir une mémoire principale et une mémoire auxiliaire dans chacun des réseaux privés des fournisseurs de services.

L'invention est particulièrement bien adaptée, bien que de façon non limitative, aux connexions de type xDSL, radio (par exemple GPRS, UMTS, WiFi ou WiMAX), et optiques câblées (fibres optiques).

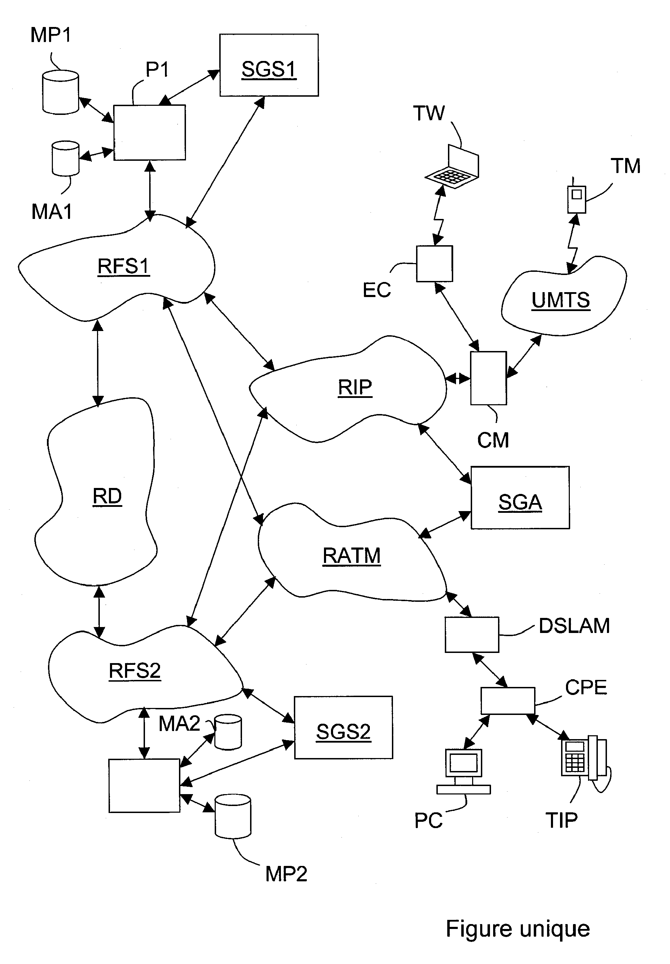

D'autres caractéristiques et avantages de l'invention apparaîtront à l'examen de la description détaillée ci-après, et du dessin annexé, sur lequel l'unique figure illustre de façon très schématique un exemple de combinaison de réseaux de communication permettant de mettre en oeuvre le procédé d'établissement de connexions haut débit selon l'invention. Le dessin annexé pourra non seulement servir à compléter l'invention, mais aussi contribuer à sa définition, le cas échéant.

Comme indiqué précédemment, l'invention a pour but de permettre à un utilisateur, éventuellement itinérant, de disposer d'une connexion, éventuellement haut débit, correspondant autant que faire ce peut à un profil de connexion choisi, pour n'importe lequel de ses terminaux de communication et/ou en n'importe quel endroit autorisant une telle connexion, et de centraliser les profils de connexion des utilisateurs et la taxation et/ou la facturation des services de connexion principal et de connexion d'accueil.

L'invention concerne tout type de connexion bas ou haut débit et tout type de terminal de communication équipé d'un modem, tels que définis dans la partie introductive, et notamment les connexions xDSL de téléphones à protocole Internet (ou IP pour « Internet Protocol ») TIP ou d'ordinateurs fixes ou portables PC ou d'assistants personnels numériques (ou PDAs) ou de consoles de jeux ou encore de terminaux pour la télévision, sur des lignes téléphoniques d'un réseau de téléphonie commuté ou PSTN, les connexions radio (par exemple GPRS, UMTS, WiFi ou WiMAX) de téléphones mobiles TM ou d'ordinateurs portables TW, ou les connexions optiques d'ordinateurs fixes ou portables ou de consoles de jeux ou encore de terminaux pour la télévision sur des câbles composés de fibres optiques.

Comme cela est illustré sur l'unique figure, on considère dans ce qui suit, à titre d'exemple non limitatif de mise en oeuvre de l'invention, le cas d'une combinaison de réseaux de communication constituée :
- d'un réseau d'accès téléphonique de type PSTN dédié aux connexions xDSL,
- d'un réseau d'accès de type UMTS dédié aux connexions téléphoniques radio mobiles,
- d'un réseau d'accès de type WiFi dédié aux connexions radio locales,
- d'un réseau de transport de type ATM (« Asynchronous Transfer Mode » - transmission temporelle asynchrone) RATM adapté au transport des flux provenant des téléphones IP TIP et des ordinateurs PC (ou consoles),
- d'un réseau de transport de type IP RIP adapté au transport de données (ou « data »),
- d'un premier réseau privé RFS1 d'un premier fournisseur de services,
- d'un second réseau privé RFS2 d'un second fournisseur de services, et
- d'un réseau de données RD, comme par exemple le réseau Internet.

Dans cet exemple de combinaison de réseaux de communication, les premier RFS1 et second RFS2 réseaux privés sont raccordés, d'une part, au réseau de données RD afin de permettre à leurs clients (principaux ou d'accueil) d'accéder à ce dernier, et d'autre part, aux différents réseaux de transport RATM et RIP. Par ailleurs, le réseau d'accès PSTN (matérialisé par les équipements DSLAM et CPE (sur lesquels on reviendra plus loin) est raccordé au réseau de transport RATM, tandis que le réseaux d'accès UMTS et le réseau d'accès WiFi (matérialisé par l'équipement EC) sont tous les deux raccordés au réseau de transport RIP par l'intermédiaire d'un équipement d'accès CM (comme par exemple un routeur IP séparant le réseau d'agrégation d'accès et le réseau local de l'opérateur (dans les réseaux GSM, GPRS/EDGE et UMTS il s'agit d'un noeud GGSN)).

On considère par ailleurs dans ce qui suit le cas d'un utilisateur (itinérant), d'une part, disposant d'un ordinateur fixe PC, raccordé à une ligne téléphonique du réseau d'accès PSTN, et d'un téléphone mobile TM connecté au réseau d'accès UMTS, et d'autre part, ayant souscrit auprès du premier fournisseur de services un abonnement pour une connexion haut débit définie par un profil de connexion.

Préférentiellement, chaque réseau privé RFSi (ici i = 1 et 2) comporte une mémoire dite « principale » MPi dans laquelle se trouvent stockées des données représentatives des utilisateurs, clients du fournisseur de services auquel il appartient, en correspondance de données représentatives des profils de connexion de ces utilisateurs clients. Chaque réseau privé RFSi est dit réseau privé principal pour ses utilisateurs clients dont les données d'utilisateur sont stockées dans sa mémoire principale MPi.

Selon l'invention, chaque utilisateur, client d'un fournisseur de services, dispose d'un identifiant d'utilisateur général pour chaque type de réseau d'accès permettant de se connecter n'importe où dans le monde, quel que soit le fournisseur d'accès disposant d'un réseau d'accès du type concerné et quel que soit le réseau privé RFS auquel ce dernier est connecté par défaut.

Cet identifiant d'utilisateur général peut par exemple être directement représentatif du fournisseur de services principal. Dans le cas d'une adresse Internet, il peut par exemple se présenter sous la forme « nombre@fournisseur de services.pays » ou « référence client (fournie par le fournisseur de services)@fournisseur de services.pays ». Cette adresse Internet peut être associée à une partie d'un numéro de type E-164 (numéro de téléphone PSTN).

Dans le cas d'un numéro de téléphone mobile, il peut se présenter sous la forme d'un numéro de type E-164 dans lequel l'association entre le numéro de la ligne fixe et le numéro de la carte SIM a été réalisée dynamiquement. Par exemple le numéro d'un téléphone mobile E-164 est du type +33 (0) 612xxxxxx, où 33 indique le pays (ici la France), puis le 6 (ou le 8) désigne un accès mobile, puis le 12 désigne l'un des opérateurs d'accès, et la suite de « x » désigne le numéro du client utilisateur.

Dans une variante, on peut envisager que chaque réseau privé RFSi dispose d'une table de correspondance entre les identifiants d'utilisateurs et les fournisseurs de services de ces utilisateurs.

Egalement selon l'invention, chaque réseau d'accès est associé, par défaut, à un réseau privé dit « d'accueil » d'un fournisseur de services.

Toujours selon l'invention, lorsqu'un terminal de communication, par exemple un ordinateur PC, se connecte au moyen d'un identifiant d'utilisateur général à un réseau d'accès associé, par défaut, à un réseau privé d'accueil, par exemple RFS2, d'un fournisseur de services d'accueil, le réseau d'accès, ici RATM, interprète cette connexion comme une demande d'établissement d'une connexion généralement haut débit (ici xDSL).

Puis, le réseau d'accès RATM communique au réseau privé d'accueil RFS2 l'identifiant d'utilisateur général afin qu'il détermine tout d'abord le fournisseur de services principal qui lui correspond.

L'utilisateur peut être éventuellement obligé de fournir son mot de passe et/ou son nom d'utilisateur (ou login), par exemple au moyen d'un message sécurisé transmis à un portail Pi du réseau privé d'accueil RFSi, chargé de gérer les connexions d'accueil.

On peut également envisager que le fournisseur de services d'accueil effectue un contrôle complémentaire de sécurité auprès de l'utilisateur qui requiert la connexion afin de confirmer une autorisation d'accès et/ou compléter un profil de connexion local (c'est-à-dire le sous-ensemble du profil de connexion principal). A cet effet, il peut notamment lui demander de fournir un code spécifique et/ou les données d'utilisateur déjà transmises et/ou de confirmer son souhait de connexion et/ou la définition du débit et/ou la qualité de service (QoS).

Un tel contrôle complémentaire peut se faire par tout moyen, et notamment au moyen d'un appel téléphonique dont le numéro est par exemple demandé à l'utilisateur requérant lorsqu'il est dirigé vers le portail du fournisseur de services d'accueil. Ce numéro peut d'ailleurs faire l'objet d'une vérification par rapport à un numéro préalablement fourni par l'utilisateur et contenu dans son profil de connexion. En variante, le contrôle peut se faire au moyen d'un message court de type SMS ou MMS, ou bien par une technique d'analyse biométrique.

Puis, le réseau privé d'accueil RFS2 détermine si la mémoire principale MP1 du réseau privé RFS1 du fournisseur de services principal de l'utilisateur contient cet identifiant d'utilisateur général.

Cette détermination peut se faire au moyen d'une demande transmise par le réseau privé d'accueil RFS2 au réseau privé principal RFS1 et requérant l'envoi d'une partie au moins du profil de connexion qui correspond (éventuellement) à l'identifiant d'utilisateur général. Cette demande contient éventuellement le mot de passe et/ou le nom d'utilisateur en complément de l'identifiant d'utilisateur général. A réception de cette demande le réseau privé principal RFS1 accède à sa mémoire principale MP1 de manière à vérifier si les données de l'utilisateur reçues correspondent effectivement à un client ayant souscrit un abonnement pour une connexion à un réseau de données (ici xDSL).

Dans l'affirmative, le réseau privé principal RFS1 détermine dans la mémoire principale MP1 le profil de connexion qui est stocké en correspondance des données de l'utilisateur, puis il transmet au réseau privé d'accueil RFS2 au moins un sous-ensemble de ce profil de connexion.

Lorsque le réseau privé d'accueil RFS2 reçoit les données représentatives du sous-ensemble du profil de connexion, il les copie dans une mémoire auxiliaire MA2. Cette mémoire auxiliaire MA2 est préférentiellement un composant physique afin que les données qu'elle contient ne soient pas perdues en cas de panne ou de dysfonctionnement.

Le stockage des données du sous-ensemble du profil de connexion, dans la mémoire auxiliaire MAi, est temporaire. Elle dure en effet pendant la durée de la connexion d'accueil.

Cette mémoire auxiliaire MAi peut être également utilisée pour stocker des informations liées aux connexions d'accueil, comme par exemple leur durée et/ou leur débit. Ces informations peuvent en effet être utiles à la taxation et/ou la facturation du service de connexion d'accueil. Contrairement aux données des sous-ensembles de profil de connexion, ces informations sont conservées plus longtemps, au moins tant que les données de taxation et/ou de facturation n'ont pas été transmises par le réseau privé d'accueil au réseau privé principal.

Comme le sait l'homme de l'art, pour qu'une connexion, par exemple haut débit, soit établie, il faut que tous les réseaux impliqués dans cette connexion (réseau d'accès, réseau de transport et réseau privé) soient configurés. Cette configuration peut être soit contrôlée par un unique système de gestion, soit, comme illustré, par un système de gestion d'accès SGA, pour ce qui concerne les réseaux de transport et les réseaux d'accès, et par un système de gestion de services SGSi propre à chaque réseau privé RFSi.

Afin de pouvoir configurer son réseau privé RFSi, son système de gestion de services SGSi est couplé à sa mémoire principale MPi ainsi qu'à sa mémoire auxiliaire MAi.

Par conséquent dans l'exemple décrit ci-avant, une fois que le réseau privé d'accueil RFS2 a copié dans la mémoire auxiliaire MA2 le sous-ensemble du profil de connexion de l'utilisateur requérant la connexion, son système de gestion de services SGS2 accède à la mémoire auxiliaire MA2 pour en extraire le sous-ensemble du profil de connexion concerné.

Puis, le système de gestion de services SGS2 configure le réseau privé d'accueil RFS2 pour qu'il permette l'établissement partiel d'une connexion entre le terminal PC requérant et ledit réseau privé d'accueil RFS2, adaptée notamment aux paramètres du sous-ensemble du profil de connexion. Sensiblement dans le même temps, le système de gestion de services SGS2 transmet au système de gestion d'accès SGA les informations nécessaires à la configuration du réseau de transport, ici RATM, et du réseau d'accès, ici PSTN et notamment son équipement d'accès xDSL DSLAM (pour « Digital Subscriber Line Access Multiplexer »), pour permettre l'établissement du reste de la connexion entre le terminal PC requérant et ledit réseau privé d'accueil RFS2, adaptée notamment aux paramètres du sous-ensemble du profil de connexion.

Il est rappelé qu'un équipement d'accès xDSL DSLAM est un concentrateur installé auprès d'un commutateur de type CPE (pour « Customer Premise Equipment ») pour mettre en oeuvre une technologie xDSL. Il est généralement constitué de modems et de filtres chargés de concentrer les flux xDSL et d'assurer leur conversion protocolaire afin qu'ils puissent passer du réseau d'accès physique vers leur réseau de transport ATM (RATM) ou IP (RIP).

Il est important de noter que la configuration des différents réseaux peut dépendre de contraintes locales de tout type, comme par exemple la politique de services du réseau privé d'accueil RFS2 et/ou la législation locale et/ou les ressources du réseau privé d'accueil RFS2 et du réseau d'accès. Par conséquent, la connexion qui est établie grâce à la configuration dépend non seulement du sous-ensemble du profil de connexion stocké dans la mémoire auxiliaire MA2 mais également des éventuelles contraintes locales. En d'autres termes, la connexion qui est établie peut être sensiblement différente du profil de connexion objet de l'abonnement souscrit par l'utilisateur pour son terminal (ici son ordinateur PC) lorsque celui-ci est connecté au réseau d'accès auquel appartient la ligne téléphonique à laquelle il est habituellement raccordé. Par exemple, en raison de contraintes techniques locales la connexion d'accueil peut être de type bas débit alors que le profil de connexion correspondant à la connexion principale (via le réseau privé principal du fournisseur de services principal) est de type haut débit.

Une fois la configuration terminée, l'utilisateur peut immédiatement utiliser la connexion xDSL pour accéder avec son ordinateur PC au réseau de données RD auquel est raccordé le réseau privé d'accueil RFS2 du fournisseur de services d'accueil.

Comme évoqué précédemment, pendant la durée de la connexion d'accueil, le réseau privé d'accueil RFS2 transmet des données de taxation et/ou de facturation au réseau privé principal RFS1 du fournisseur de services principal. Les données de facturation peuvent se présenter sous la forme de jetons (ou « tokens »). Elles sont destinées à permettre le paiement de la connexion d'accueil par le fournisseur de services principal ou, ce qui revient au même, la détermination de la balance de facturation entre fournisseurs de services. Elles peuvent également permettre au fournisseur de services principal de facturer à son client utilisateur un service lié à la mise à disposition d'une connexion principale ou d'accueil dans tous les pays et/ou quel que soit le type de terminal utilisé.

Grâce à ces données de taxation et/ou de facturation, l'utilisateur dispose d'une facturation centralisée gérée uniquement par son fournisseur de services principal, auprès duquel il a souscrit son abonnement.

Dans ce qui précède on a décrit le cas d'un utilisateur itinérant qui requiert la mise à disposition d'une connexion xDSL, pour laquelle il a souscrit un abonnement auprès de son fournisseur de services principal, alors même que son terminal (ici un ordinateur PC) est raccordé à un réseau d'accès associé au réseau privé d'accueil d'un autre fournisseur de services.

On va maintenant décrire le cas d'un utilisateur, éventuellement itinérant, qui dispose d'au moins deux terminaux de communication de types différents, par exemple un ordinateur PC et un téléphone mobile TM, et qui a souscrit un abonnement xDSL pour son ordinateur PC auprès d'un fournisseur d'accès principal dont le réseau privé est par exemple RFS1. Par ailleurs, on considère ici que l'utilisateur souhaite utiliser une partie au moins du profil de connexion xDSL correspondant à son abonnement pour se connecter, si possible en haut débit, au réseau de données RD avec son téléphone mobile TM.

Dans ce cas, l'utilisateur, qui est situé dans une cellule d'un réseau mobile d'accès (par exemple UMTS), connecte son téléphone mobile TM audit réseau d'accès UMTS au moyen de son identifiant d'utilisateur principal (adapté au réseau d'accès UMTS). Le réseau d'accès UMTS interprète cette connexion comme une demande d'établissement d'une connexion haut débit.

Deux situations peuvent alors se présenter.

Dans une première situation, le réseau d'accès UMTS est associé par défaut au fournisseur de services principal de l'utilisateur du téléphone mobile TM. Le réseau d'accès UMTS communique alors au réseau privé d'accueil RFS1 l'identifiant d'utilisateur général afin qu'il détermine tout d'abord le fournisseur de services principal qui lui correspond. Dans cette situation le réseau privé d'accueil et le réseau privé principal sont les mêmes.

L'utilisateur peut être éventuellement obligé de fournir son mot de passe et/ou son nom d'utilisateur (ou login), par exemple au moyen d'un message sécurisé transmis à un portail Pi du réseau privé d'accueil RFSi, chargé de gérer les connexions d'accueil.

On peut également envisager que le fournisseur de services d'accueil effectue un contrôle complémentaire de sécurité auprès de l'utilisateur qui requiert la connexion, comme indiqué précédemment.

Le réseau privé principal RFS1 détermine alors si sa mémoire principale MP1 contient cet identifiant d'utilisateur général, et procède aux éventuelles vérifications du nom d'utilisateur et/ou du mot de passe transmis, comme indiqué précédemment. Puis, si les vérifications sont positives le réseau privé principal RFS1 copie dans une mémoire auxiliaire MA1 au moins un sous-ensemble du profil de connexion qui correspond à l'identifiant d'utilisateur général.

Ensuite, le système de gestion de services SGS1 du réseau privé principal RFS1 accède à la mémoire auxiliaire MA1 pour en extraire le sous-ensemble du profil de connexion concerné. Puis, le système de gestion de services SGS1 configure le réseau privé principal RFS1 pour qu'il permette l'établissement partiel d'une connexion, éventuellement en haut débit, entre le téléphone mobile TM requérant et ledit réseau privé principal RFS1, adaptée aux paramètres du sous-ensemble du profil de connexion ainsi qu'aux éventuelles contraintes locales. Sensiblement dans le même temps, le système de gestion de services SGS1 transmet au système de gestion d'accès SGA les informations nécessaires à la configuration du réseau de transport, ici RIP, et du réseau d'accès, ici UMTS, pour permettre l'établissement du reste de la connexion, éventuellement en haut débit, entre le téléphone mobile TM requérant et ledit réseau privé principal RFS1, adaptée aux paramètres du sous-ensemble du profil de connexion ainsi qu'aux éventuelles contraintes locales.

Une fois la configuration terminée, l'utilisateur peut immédiatement utiliser la connexion, éventuellement en haut débit, pour accéder avec son téléphone mobile TM au réseau de données RD auquel est raccordé le réseau privé principal RFS1 du fournisseur de services principal. Comme indiqué précédemment, durant toute la connexion, des informations de taxation et/ou de facturation sont échangées entre le réseau privé d'accueil et le réseau privé principal pour la facturation de l'utilisateur et pour la balance de paiement entre le fournisseur de l'accès mobile et le fournisseur de services fixe.

Dans une seconde situation, le réseau d'accès UMTS est associé par défaut à un fournisseur de services qui n'est pas le fournisseur de services principal de l'utilisateur du téléphone mobile TM. Le réseau d'accès UMTS communique au réseau privé d'accueil RFS2, auquel il est associé par défaut, l'identifiant d'utilisateur général afin qu'il détermine tout d'abord le fournisseur de services principal qui lui correspond. Dans cette situation le réseau privé d'accueil RFS2 et le réseau privé principal RFS1 sont différents.

Le réseau privé d'accueil RFS2 détermine ensuite si la mémoire principale MP1 du réseau privé RFS1 du fournisseur de services principal de l'utilisateur contient cet identifiant d'utilisateur général.

L'utilisateur peut être éventuellement obligé de fournir son mot de passe et/ou son nom d'utilisateur (ou login), par exemple au moyen d'un message sécurisé transmis à un portail Pi du réseau privé d'accueil RFSi, chargé de gérer les connexions d'accueil.

On peut également envisager que le fournisseur de services d'accueil effectue un contrôle complémentaire de sécurité auprès de l'utilisateur qui requiert la connexion, comme indiqué précédemment.

Cette détermination peut se faire comme indiqué précédemment au moyen d'une demande transmise par le réseau privé d'accueil RFS2 au réseau privé principal RFS1 et requérant l'envoi d'une partie au moins du profil de connexion qui correspond (éventuellement) à l'identifiant d'utilisateur général. Cette demande contient éventuellement le mot de passe et/ou le nom d'utilisateur en complément de l'identifiant d'utilisateur général. A réception de cette demande le réseau privé principal RFS1 accède à sa mémoire principale MP1 de manière à vérifier si les données de l'utilisateur reçues correspondent effectivement à un client ayant souscrit un abonnement pour une connexion haut débit (ici xDSL).

Dans l'affirmative, le réseau privé principal RFS1 détermine dans la mémoire principale MP1 le profil de connexion qui est stocké en correspondance des données de l'utilisateur, puis il transmet au réseau privé d'accueil RFS2 au moins un sous-ensemble de ce profil de connexion.

Lorsque le réseau privé d'accueil RFS2 reçoit les données représentatives du sous-ensemble du profil de connexion, il les copie dans une mémoire auxiliaire MA2.

Ensuite, le système de gestion de services SGS2 du réseau privé d'accueil RFS2 accède à la mémoire auxiliaire MA2 pour en extraire le sous-ensemble du profil de connexion concerné. Puis, le système de gestion de services SGS2 configure le réseau privé d'accueil RFS2 pour qu'il permette l'établissement partiel d'une connexion, éventuellement en haut débit, entre le téléphone mobile TM requérant et ledit réseau privé d'accueil RFS2, adaptée aux paramètres du sous-ensemble du profil de connexion ainsi qu'aux éventuelles contraintes locales. Sensiblement dans le même temps, le système de gestion de services SGS2 transmet au système de gestion d'accès SGA les informations nécessaires à la configuration du réseau de transport, ici RIP, et du réseau d'accès, ici UMTS, pour permettre l'établissement du reste de la connexion, éventuellement en haut débit, entre le téléphone mobile TM requérant et ledit réseau privé d'accueil RFS2, adaptée aux paramètres du sous-ensemble du profil de connexion ainsi qu'aux éventuelles contraintes locales.

Une fois la configuration terminée, l'utilisateur peut immédiatement utiliser la connexion, éventuellement en haut débit, pour accéder avec son téléphone mobile TM au réseau de données RD auquel est raccordé le réseau privé d'accueil RFS2 du fournisseur de services d'accueil.

Comme indiqué précédemment, pendant la durée de la connexion d'accueil, le réseau privé d'accueil RFS2 transmet des données de facturation au réseau privé principal RFS1 du fournisseur de services principal.

De nombreux autres exemples d'utilisation du procédé selon l'invention, correspondant à d'autres situations peuvent être envisagés.

Ainsi, on peut envisager qu'un utilisateur ait souscrit un abonnement pour une connexion haut débit adaptée à son téléphone mobile TM (ou à un terminal WiFi ou WiMAX), et qu'il souhaite utiliser une partie au moins du profil de connexion de cet abonnement pour un autre de ses terminaux, éventuellement d'un autre type, comme par exemple un ordinateur PC, un téléphone IP ou une console.

L'invention ne se limite pas aux modes de réalisation de procédé d'établissement de connexion décrits ci-avant, seulement à titre d'exemple, mais elle englobe toutes les variantes que pourra envisager l'homme de l'art dans le cadre des revendications ci-après.

## Revendications

1. Procédé d'établissement de connexions pour l'accès à au moins un réseau de données (RD) de terminaux de communication (TIP, PC, TM, TW), utilisés par des utilisateurs ayant souscrits des abonnements correspondant respectivement à des profils de connexion auprès de fournisseurs de services dits « principaux », via des réseaux privés (RFSi) de fournisseurs de services et des réseaux d'accès de types différents fixes (PSTN) ou mobiles (UMTS), raccordés entre eux par des réseaux de transport de types différents (RATM, RIP), **caractérisé en ce qu'**il consiste i) à attribuer à chacun desdits utilisateurs un identifiant d'utilisateur général pour chaque type de réseau d'accès (PSTN, UMTS) et à stocker chaque identifiant d'utilisateur général en correspondance du profil de connexion dans une mémoire dite « principale » (MPi), ii) en cas de connexion d'un terminal (PC) à l'un desdits réseaux d'accès (PSTN), associé à un réseau privé d'accueil (RFS2) d'un fournisseur de services d'accueil, au moyen d'un identifiant d'utilisateur général, à déterminer dans ladite mémoire principale (MP1) si elle contient ledit identifiant d'utilisateur général et dans l'affirmative à copier au moins un sous-ensemble du profil de connexion correspondant dans une mémoire auxiliaire (MA2) dudit réseau privé d'accueil (RFS2), et iii) à configurer ledit réseau privé d'accueil (RFS2), ledit réseau d'accès (PSTN) auquel est raccordé ledit terminal (PC) et le réseau de transport (RATM) qui les raccorde en fonction d'une partie au moins dudit sous-ensemble copié de manière à établir une connexion entre ledit terminal (PC) et ledit réseau privé d'accueil (RFS2), ledit réseau privé d'accueil (RFS2) transmettant des données de taxation et/ou de facturation audit réseau privé du fournisseur de services principal afin qu'il gère la facturation de chaque connexion d'accueil pour ses clients utilisateurs et/ou qu'il puisse lui facturer le service rendu pour chaque connexion d'accueil.

2. Procédé selon la revendication 1, **caractérisé en ce qu'**il consiste à communiquer au réseau privé d'accueil (RFS2) du fournisseur de services d'accueil, au moyen du terminal (PC) connecté au réseau d'accès associé (PSTN), des données représentatives dudit identifiant d'utilisateur général ainsi que d'un nom d'utilisateur et/ou d'un mot de passe, de manière à authentifier ledit utilisateur.

3. Procédé selon la revendication 2, **caractérisé en ce que** ladite communication des données de l'utilisateur se fait au moyen d'au moins un message sécurisé.

4. Procédé selon l'une des revendications 2 et 3, **caractérisé en ce qu'**à réception desdites données de l'utilisateur le réseau privé d'accueil (RFS2) du fournisseur de services d'accueil détermine le fournisseur de services principal dudit utilisateur de manière à transmettre à son réseau privé principal (RFS1) lesdites données de l'utilisateur, et à réception desdites données de l'utilisateur ledit réseau privé principal (RFS1) vérifie qu'elles correspondent effectivement à un client ayant souscrit un abonnement pour une connexion, puis dans l'affirmative il détermine dans ladite mémoire principale (MP1) le profil de connexion souscrit de manière à transmettre audit réseau privé d'accueil (RFS2) du fournisseur de services d'accueil un sous-ensemble dudit profil de connexion en vue de sa mémorisation dans ladite mémoire auxiliaire (MA2).

5. Procédé selon l'une des revendications 1 à 4, **caractérisé en ce que** ledit fournisseur de services d'accueil effectue un contrôle complémentaire de sécurité auprès d'un utilisateur qui requiert une connexion de manière à confirmer une autorisation d'accès et/ou compléter un profil de connexion local.

6. Procédé selon la revendication 5, **caractérisé en ce que** ledit contrôle complémentaire de sécurité consiste à établir une liaison téléphonique avec ledit utilisateur pour lui demander une confirmation de demande de connexion et/ou la communication de données d'identification.

7. Procédé selon l'une des revendications 1 à 6, **caractérisé en ce que** ledit réseau privé d'accueil (RFS2) initie l'établissement de la connexion avec ledit terminal (PC) en fonction dudit sous-ensemble du profil de connexion stocké dans ladite mémoire auxiliaire (MA2) et de contraintes locales.

8. Procédé selon l'une des revendications 1 à 7, **caractérisé en ce qu'**il consiste à prévoir au moins un système de gestion d'accès (SGA) raccordé auxdits réseaux de transport (RATM, RIP) et auxdits réseaux d'accès (PSTN, UMTS) associés de manière à les configurer sélectivement pour établir lesdites connexions.

9. Procédé selon la revendication 8, **caractérisé en ce qu'**il consiste à raccorder ledit système de gestion d'accès (SGA) auxdits réseaux privés (RFSi) de manière à les configurer sélectivement pour établir lesdites connexions.

10. Procédé selon l'une des revendications 1 à 8, **caractérisé en ce qu'**il consiste à prévoir des systèmes de gestion de services (SGSi) raccordés respectivement auxdits réseaux privés (RFSi) de manière à les configurer sélectivement pour établir lesdites connexions.

11. Procédé selon l'une des revendications 1 à 10, **caractérisé en ce qu'**il consiste à prévoir une mémoire principale (MPi) et une mémoire auxiliaire (MAi) dans chacun desdits réseaux privés (RFSi) des fournisseurs de services.
